# EUROPEAN PATENT APPLICATION

(11) **EP 1 094 385 A1**
(43) Date of publication of application: **25.04.2001**
(21) Application number: 99402353.9
(22) Date of filing: 27.09.1999
(51) Int. Cl.: G06F 3/033, G09G 5/14

(54) **Windowing systems**

(71) Applicant: CANAL+ Société Anonyme, 75711 Paris Cedex 15 (FR)
(72) Inventor: Ruelle, Alex, 75516 Paris Cedex 15 (FR)
(74) Representative: Cozens, Paul Dennis

(57) **Abstract**

A method of displaying a window on a screen is described, in which the window has a background through which underlying objects are visible. Also described are methods of managing windows when drawing takes place in a window which lies under a such a window.

## Description

The invention relates to windowing systems for displaying windows on a screen, and in particular to a windowing system for use with receiver/decoders.

Windowing systems are used to allow different window contents, for example graphical objects such as text or graphical images, to be displayed simultaneously in different areas, known as windows, on a screen. Windows in conventional windowing systems comprise rectangles in a area of which graphical objects may be drawn for display against an opaque background. Windows generally occupy a selected area of the screen, a size, a background colour and a position of a window normally being defined on opening the window and alterable after opening.

Conventional windowing systems may be inflexible in the way they allow information to be presented on the screen. For example, if two windows overlap, then the foremost window will obscure the overlapped part of the underlying window.

In a first aspect of the present invention there is provided a method of displaying a window on a screen wherein the window has a background through which underlying objects are visible.

The invention provides the advantage that information may be presented on a screen with some or all of the benefits of a windowing system, whilst objects underlying the window may be at least partially seen through the window.

The invention stems from the realisation that windows may have a transparent background, provided certain precautions are taken. Such precautions include not drawing behind the window once the window has been drawn, or monitoring drawing behind the window to correct for any effects of the drawing.

The invention also provides a method of displaying a window comprising the steps of defining the size of the window, drawing foreground objects in the window, and arranging the background of the window such that objects underlying the background are visible. The background is preferably those parts of the window in which no foreground objects are drawn.

The method may further comprise drawing a frame of the window, such that the limits of the window are visible. The size of the window may be independent of the size of the screen, and the window may be resizeable and moveable on the screen.

The step of drawing foreground objects may comprise setting foreground pixels to desired values, and the step of arranging the background may comprise leaving at least one pixel value unaltered, or blending at least one pixel value with a pixel value of an underlying image, in a region defining the background. In this way, underlying objects may be visible through the background, by making the background either partially or completely transparent.

In one embodiment, the background is completely transparent, and no background pixel values are drawn. In another embodiment, the background is assigned a transparency factor, and at least one background pixel value is blended with at least one pixel value of an underlying object in dependence on the transparency factor. This can allow images in the background to be visible at the same time as underlying objects. For example, the background may have a logo or watermark which is visible, but through which underlying objects may be seen. The transparency factor may be adjustable, for example by the user or under control of the client of the window. In a further embodiment, different transparency factors are assigned to different parts of the background. For example, some parts of the background may be completely transparent, while other parts may have background pixel values which are blended with pixel values of underlying objects.

A problem which has been identified pursuant to the present invention is that drawing in a window which lies underneath a window with a transparent background may result in corruption of images in the transparent window. For example, foreground objects in a transparent window may be overwritten by the drawing. The method may therefore further comprise monitoring drawing in a further window so that drawing in the further window affecting said window can be corrected.

This feature may also be provided independently, and thus the invention also provides a method of drawing in a window, preferably a window which may lie at least partially under an overlying window having a background through which underlying objects are visible, the method comprising drawing in the window and monitoring the drawing so that drawing affecting an overlying window can be corrected.

In order to correct drawing in the overlying window, the method may further comprise determining a window which may be affected by the drawing, and sending a signal (for example, an expose event) instructing a client of the window which may be affected to redraw at least part of that window.

In one embodiment a signal is sent following each drawing operation. However, it has been discovered pursuant to the present invention that sending signals in this way may lead to a large number of redrawing operations, with the result that a large amount of processing is dedicated to redrawing. According to a preferred embodiment of the invention this problem is overcome by suppressing the sending of a signal for at least one drawing operation.

The feature may also be provided independently, and thus in another aspect of the invention there is provided a method of drawing in a window, preferably a window which may lie at least partially under a window having a background through which underlying objects are visible, the method comprising providing a first mode in which a signal (for example, an expose event) is sent following each drawing operation instructing a client of a window which may be affected by the drawing to redraw at least part of that window, and providing a second mode in which the sending of a signal is suppressed.

The above aspect of the invention provides the advantage that relatively simple drawing operations may be carried out in the first mode, in which case the affected windows will be continually updated, whereas more complex multiple drawing operations may be carried out in the second mode, which may reduce the amount of processing associated with redrawing.

The sending of a signal may be suppressed in dependence on the relationship of the windows. For example, it may be known that windows having a certain relationship to an active window which is drawn in do not overlap with that window, in which case some processing may be saved by ignoring such windows. For example, windows having the following relationship to the active window could be ignored:
- mother, that is, the window from which the active window was opened
- superiors, that is the mother, its mother etc.
- sisters, that is, windows which were opened from the same window as the active window
- daughters, that is, windows which were opened from the active window
- inferiors, that is, daughters, their daughters, etc.

Alternatively, all windows could be ignored, or all transparent windows could be ignored.

The method may further comprise sending a signal following a number of drawing operations. The method may further comprise redrawing at least part of the window which may be affected.

In another aspect of the invention there is provided a method of drawing in a windowing system in which drawing in a window is monitored and a signal is sent to at least one other window which may be affected by the drawing, the method further comprising selecting a mode in which a signal to at least one other window is suppressed for at least one drawing operation.

The above method may further comprising selecting a mode in which a signal is sent to said at least one other window, following said at least one drawing operation. The signal may be a signal instructing a client of a window that may be affected by the drawing to redraw at least part of that window.

The invention is applicable to any windowing system, for example for use with a computer. However the invention has particular application with receiver/decoders, and thus the method may be carried out by a receiver/decoder. Receiver/decoders typically have reduced processing power in comparison to personal computers, and thus embodiments of the invention which reduce the processing involved are particularly suited for use with receiver/decoders.

In another aspect of the invention there is provided a method of displaying windows on a screen, comprising:
displaying first and second windows, at least the first window having a background through which underlying objects are visible;
determining whether the first window overlaps the second window;
drawing in the second window; and
redrawing at least part of the first window if the first window overlaps the second window.

The method may further comprise determining a part of the first window which overlaps the second window, and the step of redrawing may comprise redrawing that part of the first window.

In another aspect of the invention there is provided a method of displaying a transparent window and a determined content of this transparent window on an area of the screen, comprising:
determining whether the area of the screen is at least partly used to display a portion of another window and another content of the other window corresponding to the portion;
drawing at least the portion of the other window and the corresponding other content; and
drawing at least a part of the determined content which overlaps the portion of the other window.

The invention also provides a computer readable medium having stored thereon a program for carrying out any of the methods described above, and a computer program product comprising a program for carrying out any of the methods described above.

In an apparatus aspect of the invention there is provided apparatus for displaying a window comprising means for defining the size of the window, means for drawing foreground objects in the window, and means for arranging the background of the window such that objects underlying the background are visible.

The apparatus may further comprise means for drawing a frame of the window.

The means for drawing foreground objects may comprise means for setting foreground pixels to desired values, and the means for arranging the background may be adapted to leave at least one pixel value unaltered, or to blend at least one pixel value with a pixel value of an underlying image, in a region defining the background.

The apparatus may further comprise means for monitoring drawing in a further window so that drawing in the further window affecting said window can be corrected.

In another apparatus aspect there is provided apparatus for drawing in a window, preferably a window which may lie at least partially under an overlying window having a background through which underlying objects are visible, comprising means for drawing in the window and means for monitoring the drawing so that drawing affecting an overlying window can be corrected.

The apparatus may further comprise means for determining a window which may be affected by the drawing, and means for sending a signal instructing a client of the window which may be affected to redraw at least part of that window.

The apparatus may be adapted to send a signal following each drawing operation, or the apparatus may be adapted to suppress the sending of a signal for at least one drawing operation.

In another apparatus aspect there is provided apparatus for drawing in a window, preferably a window which may lie at least partially under a window having a background through which underlying objects are visible, the apparatus having a first mode in which a signal is sent following each drawing operation instructing a client of a window which may be affected by the drawing to redraw at least part of that window, and a second mode in which the sending of a signal is suppressed.

The apparatus may be adapted to suppress the sending of a signal in dependence on the relationship of the windows. The apparatus may be adapted to send a signal following a number of drawing operations.

The apparatus may further comprise means for redrawing at least part of the window which may be affected.

In another apparatus aspect there is provided apparatus for drawing in a windowing system in which drawing in a window is monitored and a signal is sent to at least one other window which may be affected by the drawing, the apparatus comprising means for selecting a mode in which a signal to at least one other window is suppressed for at least one drawing operation.

The apparatus may further comprise means for selecting a mode in which a signal is sent to said at least one other window, following said at least one drawing operation, The signal may be a signal instructing a client of a window that may be affected by the drawing to redraw at least part of that window.

Any of the above apparatus may be a receiver/decoder.

The invention also provides a method and apparatus substantially as described with reference to and as illustrated in the accompanying drawings.

Features of one aspect may be applied to other aspects; method features may be applied to apparatus aspects and *vice versa.*

Preferred features of the present invention will now be described, purely by way of example, with reference to the accompanying drawings, in which:-
Figure 1 shows the architecture of a typical digital television system;
Figure 2 is a block diagram of a receiver/decoder;
Figure 3 shows the architecture of a receiver/decoder;
Figure 4 shows structure of a graphics system;
Figure 5 shows the interrelationship of various windows;
Figure 6 illustrates the principle of transparent windows;
Figure 7 illustrates the drawing of an object which underlies a window; and
Figure 8 illustrates the management of redrawing in a transparent windows system.

### Digital television system

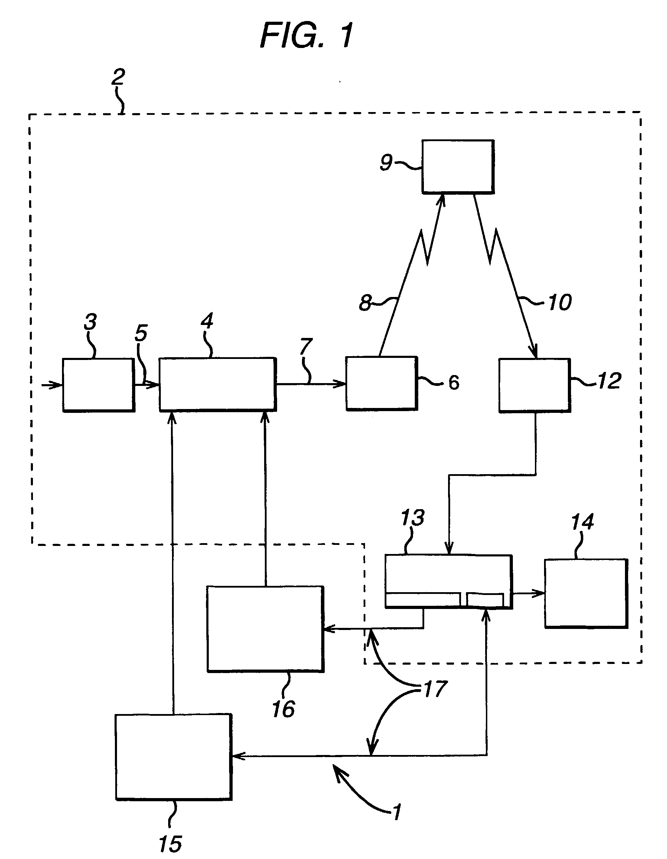

An overview of a digital television system 1 is shown in Figure 1. The invention includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. Other transport channels for transmission of the data are of course possible, such as terrestrial broadcast, cable transmission, combined satellite/cable links, telephone networks etc.

The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14. Although a separate receiver/decoder is shown in Figure 1, the receiver/decoder may also be part of an integrated digital television. As used herein, the term "receiver/decoder" includes a separate receiver/decoder, such as a set-top box, and a television having a receiver/decoder integrated therewith.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 13. Using the receiver/decoder 13 and smartcard, the end user may purchase commercial offers in either a subscription mode or a pay-per-view mode.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form.

The scrambled data and encrypted control word are then received by the receiver/decoder 13 having access to an equivalent to the exploitation key stored on a smart card inserted in the receiver/decoder to decrypt the encrypted control word and thereafter descramble the transmitted data. A paid-up subscriber will receive, for example, in a broadcast monthly EMM (Entitlement Management Message) the exploitation key necessary to decrypt the encrypted control word so as to permit viewing of the transmission.

An interactive system 16, also connected to the multiplexer 4 and the receiver/decoder 13 and again located partly in the broadcast centre and partly in the receiver/decoder, enables the end user to interact with various applications via a modemmed back channel 17. The modemmed back channel may also be used for communications used in the conditional access system 15.

### Receiver/decoder

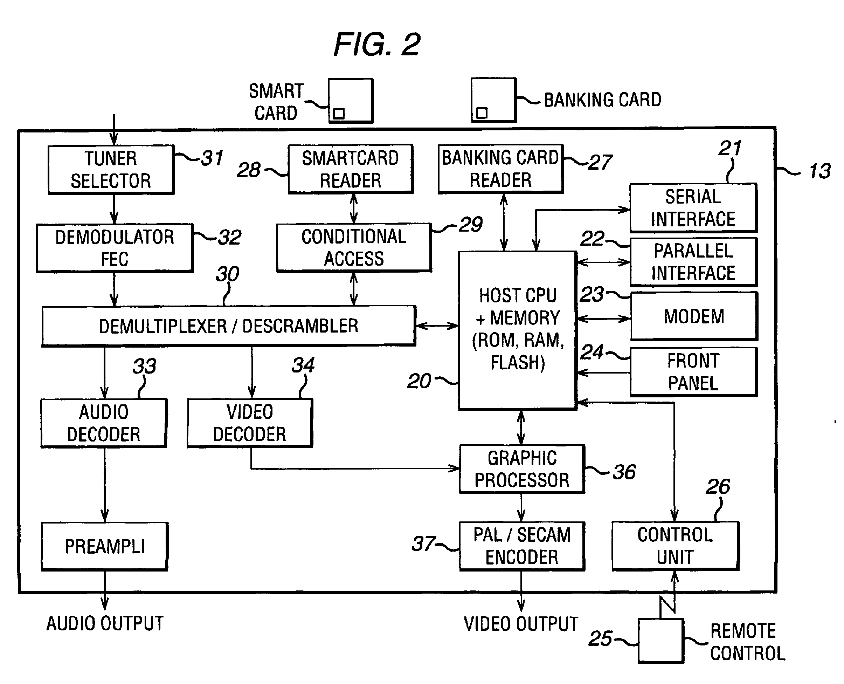

Referring to Figure 2, the elements of the receiver/decoder 13 or set-top box will now be described. The elements shown in this figure will be described in terms of functional blocks.

The receiver/decoder 13 comprises a central processor 20 including associated memory elements and adapted to receive input data from a serial interface 21, a parallel interface 22, a modem 23 (connected to the modem back channel 17 of Fig. 1), and switch contacts 24 on the front panel of the decoder.

The receiver/decoder is additionally adapted to receive inputs from an infra-red remote control 25 via a control unit 26 and also possesses two smartcard readers 27, 28 adapted to read bank or subscription smartcards 29, 30 respectively. The subscription smartcard reader 28 engages with an inserted subscription card 30 and with a conditional access unit 29 to supply the necessary control word to a demultiplexer/descrambler 30 to enable the encrypted broadcast signal to be descrambled. The decoder also includes a conventional tuner 31 and demodulator 32 to receive and demodulate the satellite transmission before being filtered and demultiplexed by the unit 30.

As used in this description, an application is preferably a piece of computer code for controlling high level functions of preferably the receiver/decoder 13. For example, when the end user positions the focus of remote control 25 on a button object seen on the screen of the television set 14 and presses a validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 13, or broadcast and downloaded into the RAM or FLASH memory of the receiver/decoder 13.

Applications are stored in memory locations in the receiver/decoder 13 and represented as resource files. The resource files comprise graphic object description unit files, variables block unit files, instruction sequence files, application files and data files.

The receiver/decoder contains memory divided into a RAM volume, a FLASH volume and a ROM volume, but this physical organization is distinct from the logical organization. The memory may further be divided into memory volumes associated with the various interfaces. From one point of view, the memory can be regarded as part of the hardware; from another point of view, the memory can be regarded as supporting or containing the whole of the system shown apart from the hardware.

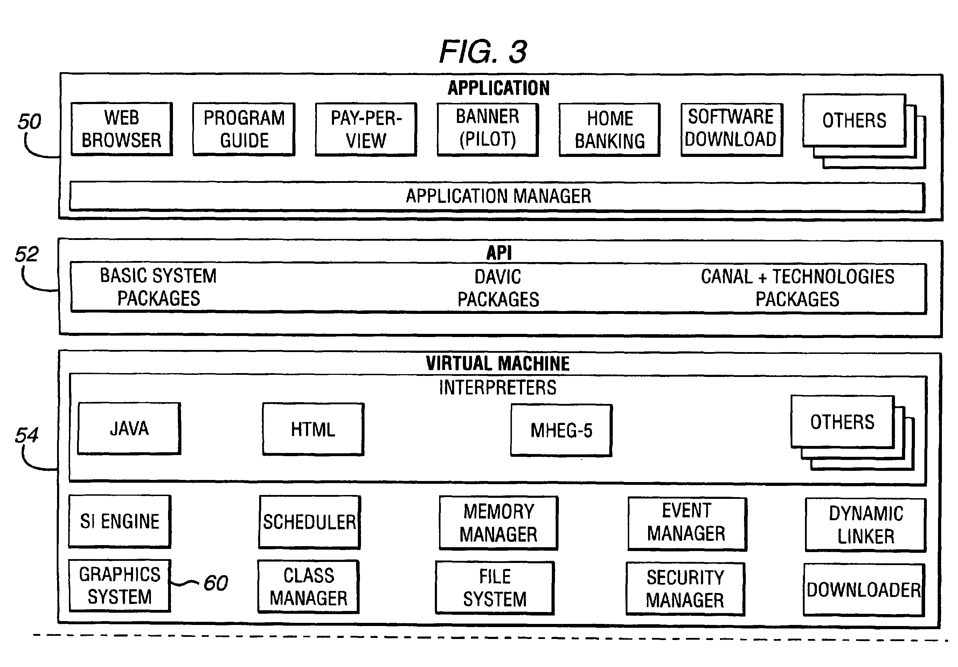

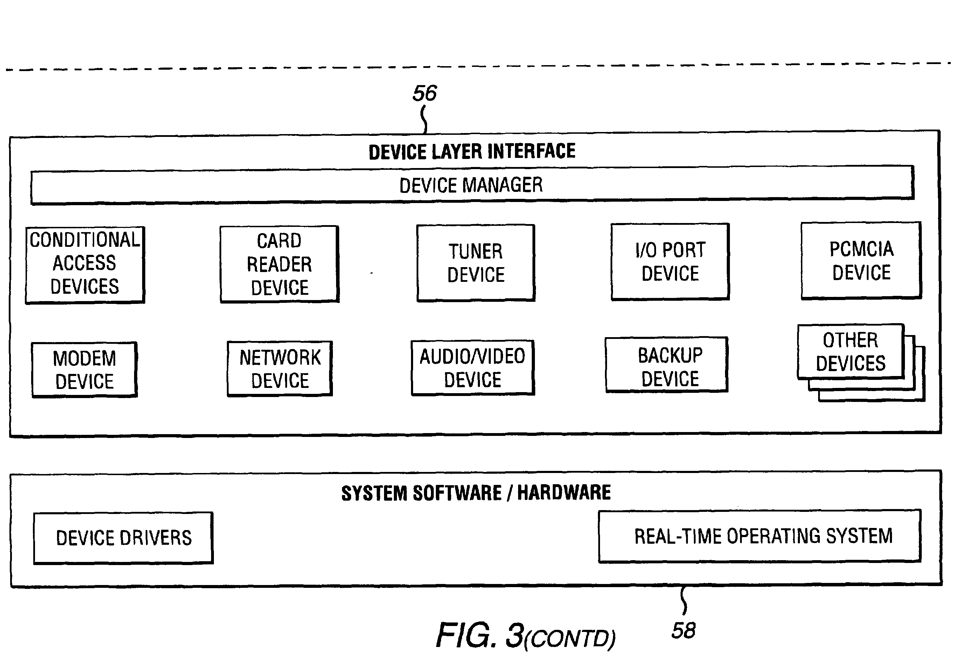

The receiver/decoder contains five software layers, organized so that the software can be implemented in any receiver/decoder and with any operating system. Referring to Figure 3, the various software layers are Application Layer 50, Application Programming Interface (API) layer 52, Virtual Machine Layer 54, Device Layer Interface 56 and System Software/Hardware Layer 58. The various layers are described below.

### Application Layer

The Application Layer 50 encompasses applications that are either resident in or downloaded to the receiver/decoder. They may be interactive applications used by customers, written in, for example, Java, HTML, MHEG-5 or other languages, or they may be applications used by the receiver/decoder to run such applications. This layer is based on a set of open Application Programming Interfaces (APIs) provided by the Virtual Machine layer. This system allows applications to be downloaded to flash or RAM memory in the receiver/decoder on-the-fly or on demand. The application code can be transmitted in compressed or uncompressed format using protocols such as Data Storage Media Command and Control (DSMCC), Network File Server (NFS) or other protocols.

Interactive applications are applications that the user interacts with, for example, to obtain products and services, such as electronic program guides, telebanking applications and games. Various security features are provided for these downloaded applications and data, as follows:
- Nothing can be downloaded to the receiver/decoder without first having been authenticated for the intended network, which prevents any unregistered software from being run in the receiver/decoder. This means that any software running in the receiver/decoder is recognized and has been fully tested.
- A Security Manager limits access of applications to various memory zones, thus assuring data integrity.
- The system can interface with any conditional access system that makes use of secure processors (for example, smart cards inserted in the receiver/decoder).

The following resident applications are used to manage interactive applications:
- Boot. The Boot application is the first application launched when the receiver/decoder is powered on. The Boot application starts the different "Managers" in the Virtual Machine, the first being the Application Manager.
- Application Manager. The Application Manager manages the interactive applications that are run in the receiver/decoder, that is, it starts, stops, suspends, resumes, handles events and deals with communication between applications. It allows multiple applications to run at once, and thus is involved in the allocation of resources among them. This application is completely transparent to the user.
- SetUp. The purpose of the SetUp application is to configure the receiver/decoder, primarily the first time it is used. It performs actions such as scanning for TV channels, setting the date and time, establishing user preferences, and so on. However, the SetUp application can be used at any time by the user to change the receiver/decoder configuration.
- Zapping. The Zapping application is used to change channels using the Program-up, Program-down and numeric keys. When another form of zapping is used, for example, through a banner (pilot) application, the Zapping application is stopped.

### API Layer

The API layer 52 provides high-level utilities for interactive application development. It includes several packages that make up this high-level API. The packages provide all the functionality necessary to run interactive applications. The packages are accessible by the applications.

In a preferred embodiment the API is adapted to run applications written in the Java programming language, Furthermore, it can interpret HTML and other formats, such as MHEG-5. Besides these interpreters, it also includes other packages and service modules that are detachable and extensible as requirements dictate.

### Virtual Machine Layer

The Virtual Machine layer 54 is composed of language interpreters and various modules and systems. It consists of everything necessary to receive and execute interactive applications in the receiver/decoder, including the following:
- Language Interpreters. Different interpreters can be installed to conform to the type of applications to be read. These include Java, HTML, MHEG-5 and others.
- Service Information (SI) Engine. The SI Engine loads and monitors common Digital Video Broadcasting (DVB) or Program System Information Protocol (PSIP) tables and puts them into a cache. It allows access to these tables by applications which need the data contained in them.
- Scheduler. This module allows for pre-emptive, multithreaded scheduling with each thread having its own event queue.
- Memory Manager. This module manages the access to memory. It also automatically compresses data in memory when necessary and performs automatic garbage collection.
- Event Manager. This module allows events to be triggered according to priority. It manages timer and event grabbing and allows applications to send events to each other.
- Dynamic Linker. This module allows the resolution of addresses arising from native Java functions, loads native methods from a Java class downloaded into RAM and resolves calls from downloaded native codes towards ROM.
- Downloader. This module uses automatic data loading from a remote DSMCC carousel or through the NFS protocol, with downloaded files accessed in the same way as resident ones. Memory clear-up, compression and authentication are also provided.
- Class Manager. This module loads classes and resolves any class referencing problems.
- File System. This module is compact and optimized to manage a hierarchical file system with multiple ROM, flash, RAM and DSMCC volumes. Flash integrity is guaranteed against any incidents.
- Security Manager. This module authenticates applications and controls the access of applications to sensitive memory and other zones of the set-top box.
- Graphics System. This system is object-orientated and optimized. It includes graphic window and object management as well as a vectorial font engine with multi-language support.

Furthermore, the DAVIC resource notification model is supported so that client resources are efficiently managed.

### Device Layer

The Device Layer 56 includes the Device Manager and devices. Devices are software modules which consist of the logical resources necessary for management of external events and physical interfaces. The Device Layer manages communication channels between drivers and applications and provides enhanced error exception checking. Some examples of managed devices are: card readers, modems, network, PCMCIA (Personal Computer Memory Card International Association), LED display and so on.

Programmers do not have to deal with this layer directly, since the API layer controls the devices from above.

### System Software/Hardware Layer

The System Software/Hardware layer 58 is provided by the manufacturer of the receiver/decoder. Because of the modularity of the system and because services supplied by the OS (such as event scheduling and memory management) are part of the Virtual Machine, the higher layers are not tied to a particular real-time operating system (RTOS) or to a particular processor.

### Graphic System

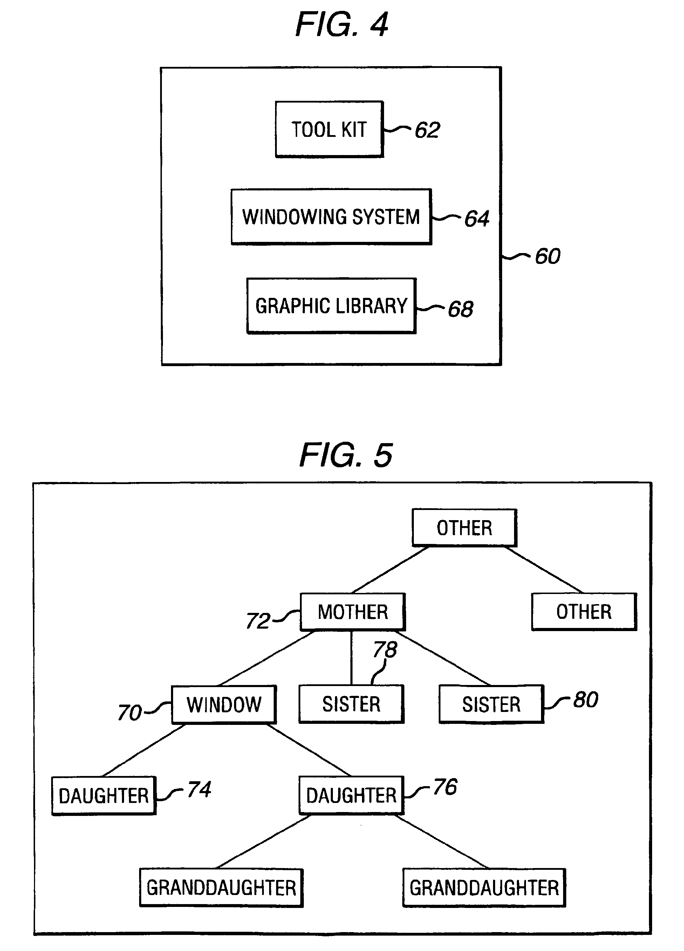

The Graphic System 60, which is part of the Virtual Machine 54 will now be described. Referring to Figure 4, the graphic system graphic system comprises widget tool kit 62, which allows graphic objects such as buttons to be drawn, windowing system 64 and graphic library 68. The windowing system 64 manages a multi-window system in which applications may draw and resize windows. The application which draws a window is referred to as the client of that window.

As an example, an application may produce a window having a menu of choices in one area of the screen, while a video image is shown across the whole screen behind the window. In this example, referring to Figure 2, the menu is produced by CPU 20 while the video comes from video decoder 34. The two are mixed in the graphic processor 26, under control of CPU 20. More complex arrangements are also possible, with multiple windows each having still or moving images within them.

The windowing system maintains a window tree, which defines the relationship between windows. An example of a window tree is shown in Figure 5. Referring to Figure 5, the window 72 from which a particular window 70 has been opened is referred to as the mother, windows 74, 76 which were opened from window 70 are referred to as daughters, and windows 78, 80 which were opened from the same mother window 72 are referred to as sisters.

### Transparent Windows

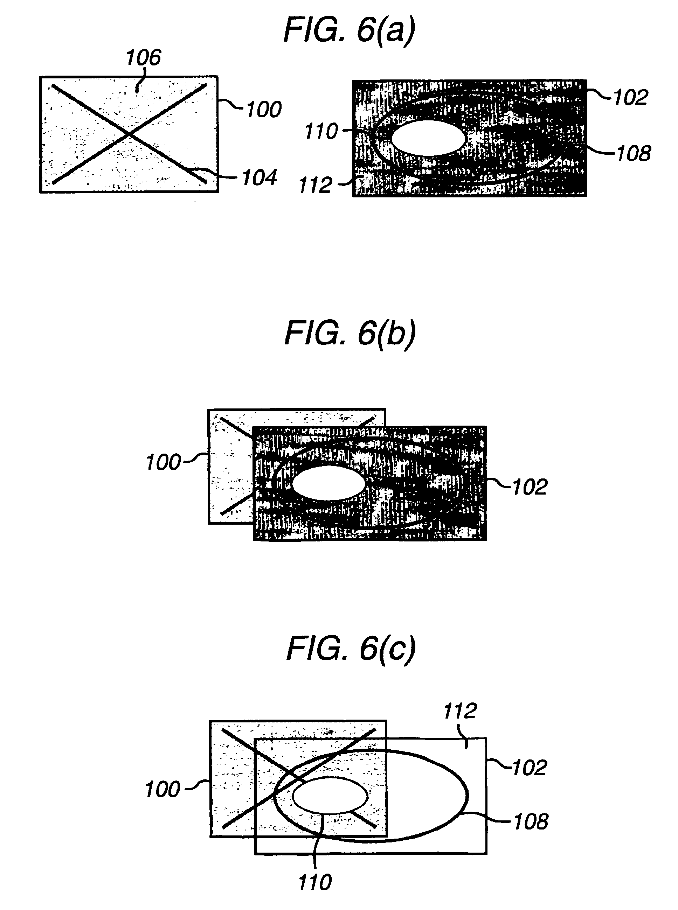

In a preferred embodiment, the windowing system manages windows known as transparent windows. A transparent window is a window which does not have a background, that is, through which underlying images can be at least partially seen. The principle of transparent windows will now be described with reference to Figures 6.

Figure 6a shows two windows 100, 102 which are not superimposed. Window 100 comprises object 104 and opaque background 106; window 102 comprises two objects 108,110 and opaque background 112. Figure 6b shows the situation when the two windows in Figure 6a are superimposed. In this case the case overlying window completely obscures the underlying window in the area which is common to the two windows. Figure 6c shows the same situation as in Figure 6a, but for the case where the overlying window is declared a transparent window. In this case, the two objects 108,110 are still visible, but the background 112 is now transparent such that window 100 may be seen through it. In the example shown in Figure 6c, the background 112 is simply not drawn.

Use of transparent windows allows independent designs to be created in different windows, while allowing images in underlying windows to be seen through overlying windows. The present system also allows multiple windows to be displayed, which may consist of a combination of transparent and non-transparent windows.

It should be noted that a transparent window may have a background which is completely transparent, or it may have a background with a certain transparency factor, in which case the background is blended with the underlying objects according to the transparency factor.

Specific mechanisms are provided to manage transparent windows. These mechanisms handle the situation where drawing takes beneath a transparent window. As will be explained, such drawing may result in corruption of images in the transparent window unless specific action is taken to prevent this.

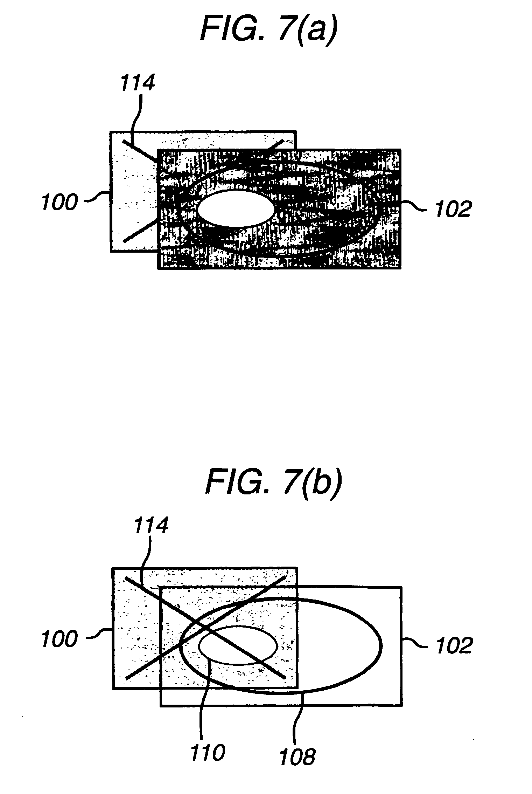

Figure 7a shows the situation when a line is drawn underneath a window with an opaque background. In this case, when line 114 is drawn, no changes occur in window 102. Figure 7b shows the situation when window 102 is declared a transparent window. In this case, when line 114 is drawn, it also appears in window 102, with the result that it overwrites the objects 108 and 110 in window 102.

One way of avoiding the overwriting of objects in a transparent window is to prevent drawing from taking place underneath the window. However, in a preferred embodiment, the overwriting of objects in a transparent window is corrected, as described below.

Firstly, the area affected by the drawing is determined. This is done by monitoring the maximum and minimum coordinates of the drawing while the drawing takes place. The windows system then searches through the window tree to identify any transparent windows which lie over the affected area. A so-called Expose Event is then sent to the clients of all such windows. The Expose Event informs the clients that the affected area should be redrawn. A client of a window is responsible for the content of that window, and thus the client is able to redraw an overwritten window. The client redraws that part of the window which coincides with the affected area.

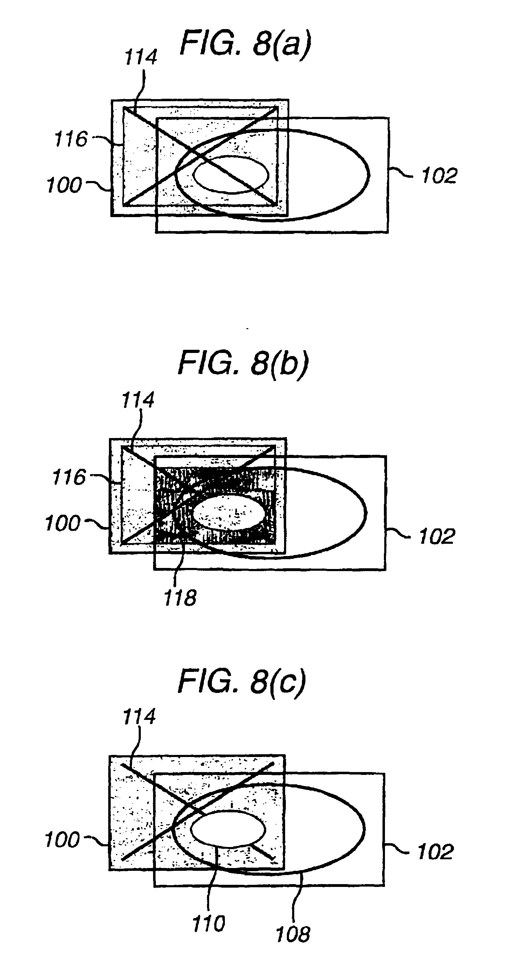

The above sequence of events is illustrated in Figures 8. Referring to Figure 8a, the area enclosed by rectangle 116 is the area affected by the drawing of line 114. The windows system then identifies window 102 as a transparent window which lies over affected area 116, and an Expose Event is sent to that window. Referring to Figure 8b, the part of the window 102 which is affected by the drawing is indicated by rectangle 118. The area within rectangle 118 is then redrawn by the client. As shown in Figure 8c, the parts of window 102 which were corrupted by the drawing of line 114 are thereby redrawn, so that the objects 108 and 110 are no longer overwritten by line 114.

The above mechanisms allow an application to draw images in a window even if it is overlaid by a transparent window, without corrupting the images in the overlying window.

The number of Expose Events which are sent to the overlying window (that is the number of times that the overlying window is redrawn) is proportional to the number of draw commands which are generated. A draw command is generated each time a single draw operation takes place. To create a complex image, a large number of draw operations may be necessary, each consisting of, for example, the drawing of a straight or curved line, a box, a circle, or some other object. This can result in a large amount of processing being dedicated to redrawing windows, which may reduce the performance of the system. The situation is made worse if multiple windows are open, particularly multiple overlying transparent windows, each of which may require an Expose Event.

In a preferred embodiment of the present invention, the number of Expose Events which are generated, and hence the number of times that an overlying window is redrawn, is reduced by suppressing the generation of Expose Events in certain circumstances. A parameter is provided, referred to herein as win_over_mode, which specifies the situations in which the generation of Expose Events will be suppressed. The parameter win_over_mode allows client applications to define which windows will be taken into account when deciding to which windows an Expose Event will be sent.

In the preferred embodiment, the win_over_mode parameter may define the following situations with regard to Expose Events:
- Clip All: normal function in which all windows are taken into account
- Ignore Inferiors: daughters and their daughters are ignored
- Ignore Sisters: sisters and their daughters are ignored
- Ignore Others: all windows which are neither sisters nor daughters are ignored
- Ignore No Background: all transparent windows are ignored
- Ignore All: all windows are ignored.

Windows which are excluded from the clipping calculation do not receive Expose Events, and thus are not redrawn. For example, it might be known that sister windows never overlie the window in which the drawing takes place. Alternatively, it might be decided to postpone redrawing all transparent windows until the drawing is complete.

Once the drawing is complete, any affected windows may be redrawn. This is done by monitoring the maximum and minimum coordinates of the drawing. When the drawing is complete, the win_over_mode parameter is then set to clip all. A virtual rectangle is then drawn around all affected areas, using the maximum and minimum coordinates of the drawing. By drawing a virtual window, an Expose Event is generated which is sent to all affected windows in the window tree. The windows which have areas coinciding with the affected area are then redrawn, in the way described above.

An example will now be described, in which an object to be drawn requires ten draw commands. The object is to be drawn in a environment containing transparent windows. The procedure is as follows:
1. Set the win_over_mode parameter to Ignore No Background
2. Perform the ten drawing operations. No Expose Events are generated, since all transparent windows are ignored.
3. Set the win_over_mode parameter to Clip All
4. Draw a virtual rectangle which encompasses all areas which have been drawn in. This operation generates an Expose Event which is sent to the affected windows.

In the above example, rather than the affected windows being redrawn ten times, as would be the case if an Expose Event were generated for each draw command, the windows are only redrawn once. In this way, considerable savings in processing may be made.

Use of the optimization described above allows an application to use transparent windows with a considerable reduction in the amount of processing involved. This is of particular advantage in environments such as receiver/decoders where processing power may be limited.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of displaying a window on a screen wherein the window has a background through which underlying objects are visible.

2. A method of displaying a window comprising the steps of:
defining the size of the window;
drawing foreground objects in the window; and
arranging the background of the window such that objects underlying the background are visible.

3. A method according to claim 2 further comprising drawing a frame of the window.

4. A method according to claim 2 or 3 wherein the step of drawing foreground objects comprises setting foreground pixels to desired values, and the step of arranging the background comprises leaving at least one pixel value unaltered, or blending at least one pixel value with a pixel value of an underlying image, in a region defining the background.

5. A method according to any of the preceding claims further comprising monitoring drawing in a further window so that drawing in the further window affecting said window can be corrected.

6. A method of drawing in a window, the method comprising drawing in the window and monitoring the drawing so that drawing affecting an overlying window can be corrected.

7. A method according to claim 5 or 6 further comprising determining a window which may be affected by the drawing, and sending a signal instructing a client of the window which may be affected to redraw at least part of that window.

8. A method according to claim 7 wherein a signal is sent following each drawing operation.

9. A method according to claim 7 further comprising suppressing the sending of a signal for at least one drawing operation.

10. A method of drawing in a window, the method comprising providing a first mode in which a signal is sent following each drawing operation instructing a client of a window which may be affected by the drawing to redraw at least part of that window, and providing a second mode in which the sending of a signal is suppressed.

11. A method according to claim 9 or 10 wherein the sending of a signal is suppressed in dependence on the relationship of the windows.

12. A method according to any of claims 9 to 11 further comprising sending a signal following a number of drawing operations.

13. A method according to any of claims 5 to 12 further comprising redrawing at least part of the window which may be affected.

14. A method of drawing in a windowing system in which drawing in a window is monitored and a signal is sent to at least one other window which may be affected by the drawing, the method further comprising selecting a mode in which a signal to at least one other window is suppressed for at least one drawing operation.

15. A method according to claim 14 further comprising selecting a mode in which a signal is sent to said at least one other window, following said at least one drawing operation.

16. A method according to claim 14 or 15 wherein the signal is a signal instructing a client of a window that may be affected by the drawing to redraw at least part of that window.

17. A method according to any of the preceding claims wherein the method is carried out by a receiver/decoder.

18. A method of displaying windows on a screen, comprising:
displaying first and second windows, at least the first window having a background through which underlying objects are visible;
determining whether the first window overlaps the second window;
drawing in the second window; and
redrawing at least part of the first window if the first window overlaps the second window.

19. Apparatus for displaying a window comprising:
means for defining the size of the window;
means for drawing foreground objects in the window; and
means for arranging the background of the window such that objects underlying the background are visible.

20. Apparatus for drawing in a window comprising means for drawing in the window and means for monitoring the drawing so that drawing affecting an overlying window can be corrected.

21. Apparatus for drawing in a window, the apparatus having a first mode in which a signal is sent following each drawing operation instructing a client of a window which may be affected by the drawing to redraw at least part of that window, and a second mode in which the sending of a signal is suppressed.

22. Apparatus for drawing in a windowing system in which drawing in a window is monitored and a signal is sent to at least one other window which may be affected by the drawing, the apparatus comprising means for selecting a mode in which a signal to at least one other window is suppressed for at least one drawing operation.
